Europäisches Patentamt

European Patent Office

Office européen des brevets

(11) Numéro de publication: **0 289 379 B1**

(19)
(12) **FASCICULE DE BREVET EUROPEEN**

(45) Date de publication de fascicule du brevet: **30.12.92**  (51) Int. Cl.5: **G01D 5/26,** H04B 10/00,
H04B 10/08, H04B 10/12

(21) Numéro de dépôt: **88400799.8**

(22) Date de dépôt: **01.04.88**

(54) **Capteur de mesure d'une grandeur physique.**

(30) Priorité: **03.04.87 FR 8704789**

(43) Date de publication de la demande:
**02.11.88 Bulletin 88/44**

(45) Mention de la délivrance du brevet:
**30.12.92 Bulletin 92/53**

(84) Etats contractants désignés:
**AT BE CH DE ES FR GB IT LI LU NL SE**

(56) Documents cités:
DE-A- 3 044 780
GB-A- 2 064 112
GB-A- 2 144 547
US-A- 3 953 809
US-A- 4 479 264

(73) Titulaire: **CROUZET Société Anonyme
4, rue François Ory
F-92128 Montrouge(FR)**

(72) Inventeur: **Caréno,François
3 rue Edgar Degas
26000 Valence(FR)**

(74) Mandataire: **Bloch, Gérard et al
2, square de l'Avenue du Bois
F-75116 Paris(FR)**

Rank Xerox (UK) Business Services

EP 0 289 379 B1

## Description

La présente invention a pour objet un capteur de mesure d'une grandeur physique comprenant des moyens sensibles à cette grandeur physique pour délivrer un signal électrique représentatif de celle-ci, des moyens de codage dudit signal électrique en un premier signal optique, émis par l'intermédiaire d'une première fibre optique vers un circuit de décodage situé à distance, et des moyens de conversion d'un deuxième signal optique, reçu par l'intermédiaire d'une deuxième fibre optique depuis une source située à distance, en un signal d'alimentation électrique desdits moyens sensibles à la grandeur physique et desdits moyens de codage.

Un tel capteur est utilisé pour mesurer localement une grandeur physique telle que distance, déplacement, température, pression, et pour transmettre à distance le résultat de la mesure. Du fait que, d'une part, l'énergie nécessaire au fonctionnement du capteur est reçue sous forme optique, et que, d'autre part, l'information utile est émise également sous forme optique, un tel capteur peut être utilisé en ambiance électromagnétique polluée, même lorsqu'il se trouve disposé à grande distance de la source d'énergie et du système de décodage et d'utilisation des mesures.

En particulier, un tel capteur est utile en tant que capteur de proximité lorsque, en ambiance industrielle, la poussière, les graisses et les risques de projection d'huile empêchent l'utilisation de capteurs de proximité entièrement optiques, basés par exemple sur la coupure d'un faisceau lumineux par l'objet à détecter, ou sur la réflection de ce faisceau par l'objet. En effet, ces capteurs comportent nécessairement des éléments optiques exposés aux salissures, ce qui risque d'en perturber le fonctionnement. Pour éviter ces inconvénients, il est commode d'utiliser un capteur dans lequel la présence de l'objet est décelée par la perturbation du champ électromagnétique au voisinage de la bobine d'un circuit oscillant dont l'amplitude d'oscillation varie selon l'importance de cette perturbation.

On connaît déjà des capteurs du type défini ci-dessus, décrits dans les documents US-A-4 479 264 et EP-A-0 075 701. Dans ces capteurs, les moyens de codage du signal électrique représentatif de l'information utile à émettre comprennent un modulateur de lumière qui reçoit une partie du signal optique continu en provenance de la source, et qui le module selon l'information utile à émettre. Un tel agencement nécessite toutefois des moyens pour diviser le signal optique de la source en deux parties, l'une destinée à être transformée en énergie électrique d'alimentation, l'autre destinée à illuminer le modulateur. Dans le document US-A-4 479 264 est enseignée l'utilisation d'un diviseur de faisceau. Dans le document EP-A-0 075 701 est enseignée l'utilisation de deux fibres optiques distinctes pour amener l'énergie lumineuse en provenance de la source vers le capteur.

Pour éviter l'emploi, d'une part d'un modulateur, et d'autre part d'un diviseur de faisceau ou de deux fibres distinctes d'amenée d'énergie lumineuse vers le capteur, il est possible, comme cela est décrit dans le document US-A-4 491 830, d'utiliser une diode électro-luminescente pour produire le signal optique relatif à ladite information utile, ce qui ne nécessite pas de conserver sous forme lumineuse une partie de l'énergie amenée au capteur. Cependant, le capteur décrit dans ce document nécessite l'emploi d'une batterie tampon, ce qui a pour inconvénients, outre un coût élevé, une limitation de la gamme de températures d'utilisation, et la nécessité d'assurer une maintenance.

De même, la demande GB-A-2 144 547 décrit un capteur alimenté en énergie à travers une fibre optique transmettant des impulsions à fréquence connue et commandant un circuit oscillant dont la fréquence est sensible à la grandeur à mesurer, l'information en retour étant transmise, au travers d'une fibre optique, sous forme d'impulsions correspondant aux alternances de même polarité dudit circuit oscillant, le décalage entre les fréquences émise et reçue en retour étant significatif de la grandeur physique. Un tel dispositif ne fait que décaler la fréquence, et l'onde sinusoïdale de l'oscillateur est transmise telle quelle après amplification monoalternance, si bien que l'émetteur correspondant émet la moitié du temps, ce qui entraîne une consommation élevée qu'il n'est pas possible de réduire en diminuant la fréquence.

La présente invention pallie les inconvénients précédents en procurant un capteur ne nécessitant l'emploi ni d'un modulateur optique, ni d'un diviseur de faisceau, ni de deux fibres optiques d'amenée, ni d'une batterie tampon.

A cet effet, le capteur de mesure, selon l'invention, d'une grandeur physique, comprenant :
- des moyens sensibles à cette grandeur physique, aptes à engendrer un signal électrique représentatif de celle-ci ;
- des moyens de codage recevant ledit signal électrique ;
- un émetteur optique commandé par lesdits moyens de codage ;
- une première fibre optique illuminable par ledit émetteur optique ;
- une seconde fibre optique apte à transmettre un second signal optique ; et
- des moyens de conversion, comprenant une mosaïque sensiblement circulaire de détecteurs photo-voltaïques, disposée directement en regard de la seconde fibre optique, aptes à recevoir ledit second signal optique et à engendrer un signal d'alimentation électrique alimentant lesdits moyens sensibles à la grandeur physique et lesdits moyens de codage, est remarquable par le fait que lesdits moyens de codage comprennent :

- un condensateur chargé, par l'intermédiaire d'une résistance de charge, à partir dudit signal d'alimentation électrique ;
- une diode électroluminescente disposée en regard de ladite première fibre optique ; et
- des moyens sensibles audit signal électrique pour décharger périodiquement ledit condensateur à travers ladite diode électroluminescente à une fréquence liée à la valeur dudit signal électrique.

On peut ainsi transmettre l'information utile en retour en utilisant un codage n'entraînant que la consommation d'énergie nécessaire. En particulier, l'émission lumineuse en retour étant effectuée sous forme d'impulsions, et non de demi-périodes de la fréquence de transmission, le fait de diminuer cette fréquence diminue proportionnellement la consommation. On peut aussi profiter de cette énergie non consommée, du fait que les impulsions peuvent être courtes, pour exciter de façon plus intense la diode électroluminescente, ce qui augmente la portée possible entre ce capteur et le système de réception et d'utilisation des mesures. Par ailleurs, le gain en énergie permet, toutes choses égales, de diminuer la taille, donc le coût, des moyens de conversion. On évite aussi la nécessité d'une batterie tampon. En effet, dans le capteur de l'invention, la diode électroluminescente ne se trouve pas connectée directement en sortie des moyens de conversion. Ceux-ci sont en fait chargés principalement par le condensateur en série avec la résistance, la valeur de celle-ci étant évidemment choisie pour que la charge résultante soit compatible avec les possibilités des moyens de conversion.

Avantageusement, lesdits moyens de conversion comportent des détecteurs regroupés en un ou plusieurs groupes, les détecteurs d'un même groupe étant connectés en série, et les groupes étant connectés en parallèle.

Un tel agencement permet d'obtenir directement, en sortie des moyens de conversion, la tension et le courant nécessaires à l'alimentation du reste du capteur, par addition des tensions de sortie de chacun des détecteurs d'un même groupe, et addition des courants de sortie de chacun des groupes.

Avantageusement encore, lesdits moyens sensibles audit signal électrique comprennent des moyens pour faire varier la valeur de ladite résistance de charge en réponse audit signal électrique, et des moyens pour décharger ledit condensateur lorsque la tension à ses bornes franchit un seuil.

Avantageusement encore, ladite grandeur physique est la distance entre un objet métallique et le capteur, lesdits moyens sensibles à la grandeur physique comprennent une bobine d'un oscillateur, disposée au voisinage dudit objet, un transistor monté en base commune dans la connexion d'émetteur duquel est disposé l'oscillateur, et un circuit de détection à résistance-capacité dans la connexion de collecteur dudit transistor.

La consommation de l'ensemble d'un tel capteur de proximité est alors particulièrement faible.

La présente invention sera mieux comprise à la lecture de la description suivante de la forme de réalisation préférée du capteur de l'invention, faite en se référant aux dessins annexés, sur lesquels :

- la figure 1 est un schéma synoptique du capteur de l'invention,
- la figure 2 est une vue extérieure du capteur de la figure 1,
- la figure 3 est une vue de face de la mosaïque de détecteurs photovoltaïques du capteur de la figure 1,
- la figure 4 est une vue en perspective de la mosaïque de la figure 3 et de la fibre optique délivrant le flux lumineux interceptée par cette mosaïque,
- les figures 5 représentent, de façon détaillée, le circuit d'oscillation et de détection du capteur de la figure 1, et,
- la figure 6 est un schéma détaillé du circuit de codage du capteur de la figure 1.

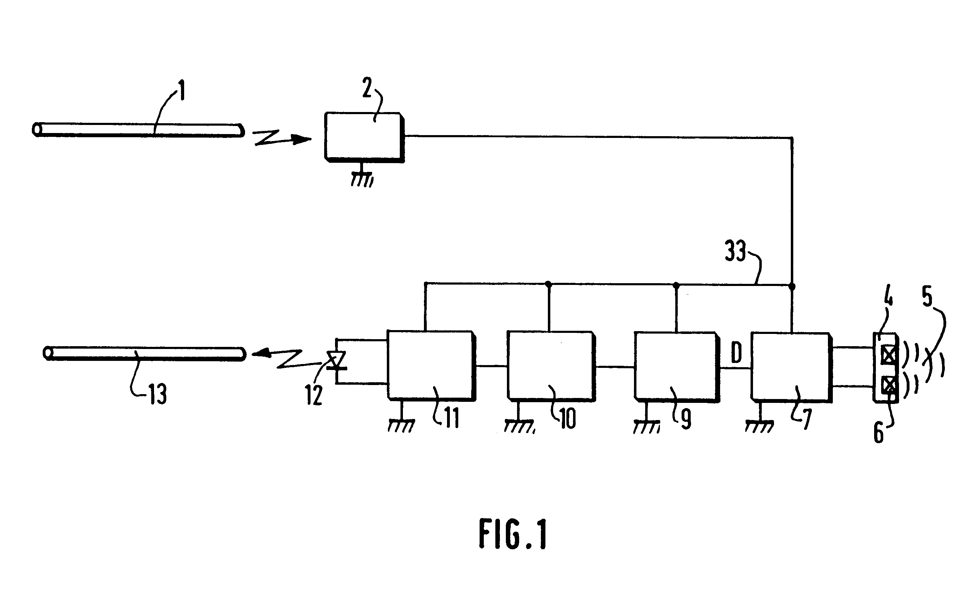

Tel que représenté sur la figure 1, le capteur de l'invention est ici un capteur de proximité qui utilise une détection électromagnétique au moyen d'une bobine 6 produisant dans son voisinage un champ électromagnétique 5, entretenu par un oscillateur inclus dans un circuit d'oscillation et détection 7. La bobine est avantageusement insérée dans un pot ferrite 4 dont la face ouverte représente la face de détection.

La présence d'un objet métallique dans le champ électromagnétique 5 modifie les caractéristiques de l'oscillateur, ce qui se traduit par une variation de l'amplitude des oscillations, amplitude détectée par un détecteur également contenu dans le circuit 7, qui délivre donc un signal détecté D, sous forme électrique. Le signal électrique D est appliqué à une bascule 9 de Schmitt, qui a pour rôle d'introduire, de façon connue, de l'hystérésis, afin d'éviter un phénomène d'oscillations, étant entendu que, ici, seule la présence ou l'absence d'un objet métallique dans le champ électromagnétique 5 est détectée. Le signal de sortie de la bascule 9 est appliqué, après amplification dans un amplificateur 10, à un circuit de codage 11. Celui-ci commande une diode électroluminescente 12 pour émettre, à l'entrée d'une fibre optique 13, un signal optique codé, représentatif de la présence ou de l'absence d'un objet métallique dans le champ électromagnétique 5.

La fibre optique 13 achemine le signal vers un circuit de décodage et d'utilisation de l'information captée, circuit situé à distance, et non représenté.

A titre d'exemple, le signal optique sur la fibre optique 13 comprend une suite d'impulsions lumineuses de fréquence de récurrence 5 kH$_z$ lorsqu'un objet métallique a été détecté, cette fréquence de récurrence étant de 10 kH$_z$ lorsqu'aucun objet n'a été détecté. Naturellement, si le signal optique sur la fibre optique 13 ne correspond à aucun des signaux précédents, c'est que le capteur présente un défaut de fonctionnement, ou est en panne.

Le circuit d'oscillation et de détection 7, la bascule 9, l'amplificateur 10, et le circuit de codage 11 sont alimentés en énergie électrique par la ligne 33, reliée à la sortie d'un dispositif de conversion 2 d'énergie lumineuse en énergie d'alimentation électrique, disposé à la sortie d'une fibre optique 1 qui amène, sous forme lumineuse, l'énergie au capteur, en provenance d'une source située à distance, en général au même endroit que le circuit de décodage, et non représentée.

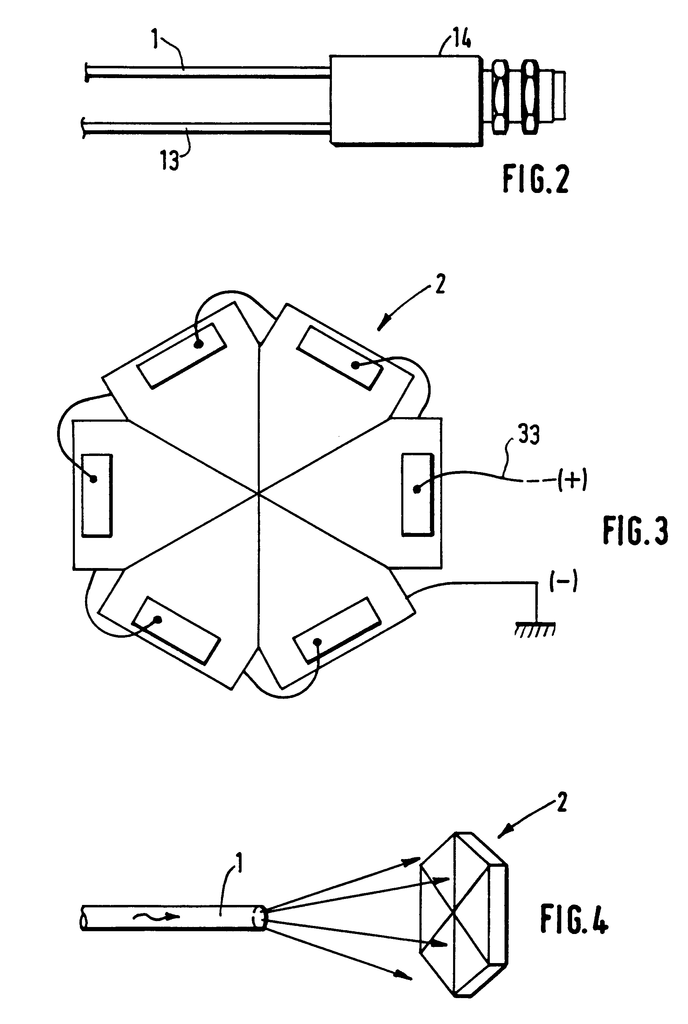

Comme le montre la figure 2, l'ensemble des éléments précédents est rassemblé à l'intérieur d'un boîtier 14 relié aux deux fibres optiques 1 et 13.

Comme le montre la figure 3, le dispositif de conversion 2 comprend une mosaïque sensiblement circulaire de détecteurs photovoltaïques, disposée directement en regard de la fibre optique 1, pour intercepter la totalité du flux lumineux qui en sort.

Ici, chaque détecteur est découpé pour avoir sensiblement la forme d'un triangle équilatéral, et la mosaïque comprend six détecteurs agencés en rosace. Chaque détecteur délivre une tension valant sensiblement 0,5 Volt, et les six détecteurs sont connectés en série, afin que soit disponible, en sortie du dispositif 2, une tension de sensiblement 3 Volts, suffisante pour alimenter en énergie électrique les différents circuits. La borne positive de sortie du dispositif de conversion 2 est ici reliée à la ligne 33, sa borne négative étant reliée à la masse.

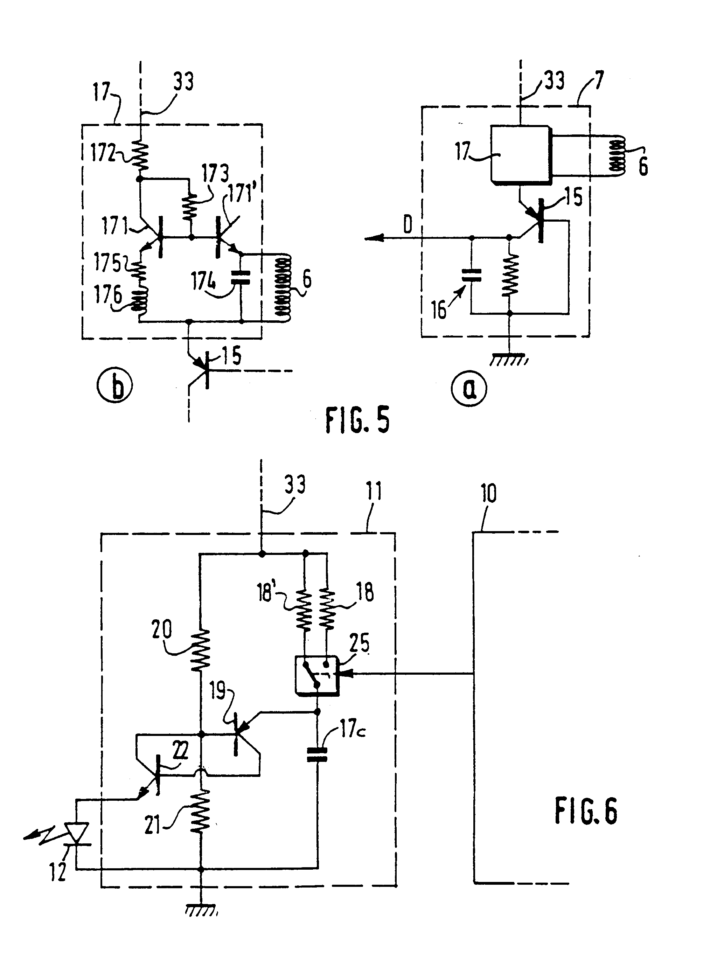

Ainsi, il n'est pas nécessaire d'utiliser un dispositif optique de focalisation en sortie de la fibre 1, car comme le montre la figure 4, la totalité du flux lumineux en sortie de la fibre est interceptée sans intermédiaire par la mosaïque.

Comme le montre la figure 5a, la bobine 6 fait partie d'un oscillateur 17 disposé dans la connexion d'émetteur d'un transistor 15 ici de type PNP, connexion reliée à la ligne 33, tandis qu'un circuit de détection 16, à résistance-capacité, est disposé dans la connexion de collecteur reliée à la masse. La base du transistor 15 est reliée à la masse et celui-ci est donc monté en base commune. Ce montage assure à la fois l'alimentation de l'oscillateur 17 et la détection de l'amplitude des oscillations, le signal D étant pris sur le collecteur du transistor 15.

Comme le montre la figure 5b, l'oscillateur 17 comprend ici un transistor 171, de type NPN, dont le collecteur est relié à la ligne 33 par l'intermédiaire d'une résistance 172 de polarisation. La base du transistor 171 est reliée d'une part à son collecteur par l'intermédiaire d'une résistance 173 de polarisation, et d'autre part à la base d'un transistor 171', identique au transistor 171, dont le collecteur est en l'air. L'émetteur du transistor 171' est relié par l'intermédiaire de la bobine 6 à l'émetteur du transistor 15. Un condensateur 174 est connecté en parallèle sur la bobine 6 pour former un circuit oscillant. L'émetteur du transistor 171 est relié, par l'intermédiaire d'une résistance 175 de réglage du niveau des oscillations, en série avec une bobine 176, au collecteur du transistor 15.

La bascule de Schmitt 9 est réalisée, de façon connue, à l'aide de deux transistors, et l'amplificateur 10, de façon également connue, à l'aide d'un transistor en commutation.

Comme le montre la figure 6, le circuit de codage 11 comprend un condensateur 17C, chargé sous la tension de la ligne 33 par l'intermédiaire, soit d'une résistance 18, soit d'une résistance 18', selon la position d'un commutateur analogique 25 commandé par le signal de sortie de l'amplificateur 10.

L'émetteur d'un transistor 19, ici de type PNP, dont la base est polarisée par un pont de deux résistances 20 et 21 à partir de la ligne 33, est relié au point de jonction entre le condensateur 17C et le commutateur analogique 25. Le collecteur du transistor 19 est relié à la base d'un transistor 22, ici de type NPN, dont l'émetteur alimente la diode électroluminescente 12. Le collecteur du transistor 22 est relié à la base du transistor 19.

Lorsque le potentiel d'émetteur du transistor 19 dépasse le seuil représenté par son potentiel de base, ce transistor se met en conduction, ainsi que le transistor 22. Par effet d'avalanche, l'ensemble de ces deux transistors assure alors une décharge brutale du condensateur 17C dans la diode électroluminescente 12, ce qui assure l'émission, par celle-ci, d'une impulsion lumineuse, sans prise directe d'énergie sur la ligne 33. Le processus est cyclique, avec une période de recurrence qui dépend ici de la valeur de la résistance de charge 18, ou 18', mise en service sous l'action du signal de sortie de l'amplificateur 10, c'est-à-dire du signal D.

Ainsi, on peut dire que le commutateur 25, et les résistances 18 et 18' permettent de faire varier la valeur de la résistance de charge en réponse au signal D. On peut aussi dire que le commutateur 25, les résistances 18, 18', 20, et 21, ainsi que les transistors 19 et 22, sont des moyens sensibles au signal D qui déchargent périodiquement le condensateur 17 à travers la diode électroluminescente 12, avec une période liée à la valeur du signal D.

Naturellement, la présente invention n'est pas limitée à la forme de réalisation qui vient d'être décrite.

Ainsi, il est à la portée d'un homme de métier de modifier le capteur qui vient d'être décrit pour transmettre, au lieu d'un signal codé représentatif de la présence ou de l'absence d'un objet métallique, un signal codé représentatif de la distance de l'objet métallique, si la précision de l'ensemble sensible à la proximité d'un objet métallique est suffisante. Le codage pourra être le suivant, par exemple :

distance 1 mm = fréquence de recurrence 1 kH$_z$
distance 2 mm = fréquence de recurrence 2 kH$_z$
...
distance 10 mm = fréquence de recurrence 10 kH$_z$.

De même, au lieu de commuter des résistances de charge, il est possible de commuter des condensateurs, ou encore d'utiliser une résistance de charge dont la valeur est commandable.

De même, il est possible de prévoir d'autres agencements pour la mosaïque de détecteurs photovoltaïques, pourvu que celle-ci reste de forme sensiblement circulaire, et sans zones inactives du point de vue de la conversion optique-électrique. Dans le cas où on prévoit un grand nombre de détecteurs, il est avantageux de les regrouper en plusieurs groupes, les détecteurs d'un même groupe étant connectés en série pour que leurs tensions s'additionnent, et les groupes étant connectés en parallèle, pour que leurs courants s'additionnent.

De même, il est possible d'utiliser tout type d'oscillateur à la place de l'oscillateur 17 représenté sur la figure 5b, et notamment un oscillateur de type Colpitts, ou Hartley. Dans l'oscillateur de la figure 5b, la jonction base-émetteur du transistor 171' peut être remplacée par une diode à jonction, dont la dérive en température doit être aussi proche que possible de celle de la jonction baseémetteur du transistor 171.

Enfin, la présente invention n'est pas limitée à un capteur de proximité, et peut s'appliquer, de façon évidente, à tout type de capteur d'une grandeur physique. Dans ce cas, la bobine 6 et le circuit 7 sont remplacés par un dispositif sensible à la grandeur physique à mesurer.

**Revendications**

1. Capteur de mesure d'une grandeur physique, comprenant :
   - des moyens (6,7) sensibles à cette grandeur physique, aptes à engendrer un signal électrique (D) représentatif de celle-ci ;
   - des moyens de codage (9,10,11,12) recevant ledit signal électrique (D) ;
   - un émetteur optique (12) commandé par lesdits moyens de codage (9,10,11,12) ;
   - une première fibre optique (13) illuminable par ledit émetteur optique (12) ;
   - une seconde fibre optique (1) apte à transmettre un second signal optique ; et
   - des moyens de conversion (2), comprenant une mosaïque sensiblement circulaire de détecteurs photo-voltaïques, disposée directement en regard de la seconde fibre optique (1), aptes à recevoir ledit second signal optique et à engendrer un signal d'alimentation électrique alimentant lesdits moyens (6,7) sensibles à la grandeur physique et lesdits moyens de codage (9,10,11,12), caractérisé par le fait que lesdits moyens de codage (9,10,11,12) comprennent :
   - un condensateur (17C) chargé, par l'intermédiaire d'une résistance de charge (18,18'), à partir dudit signal d'alimentation électrique ;
   - une diode électroluminescente, correspondant audit émetteur optique, (12) disposée en regard de ladite première fibre optique (13) ; et
   - des moyens (25,18,18',19-22) sensibles audit signal électrique (D) pour décharger périodiquement ledit condensateur (17C) à travers ladite diode électroluminescente (12) à une fréquence liée à la valeur dudit signal électrique (D).

2. Capteur selon la revendication 1, dans lequel lesdits détecteurs des moyens de conversion (2) sont regroupés en un ou plusieurs groupes, les détecteurs d'un même groupe étant connectés en série, et les groupes étant connectés en parallèle.

3. Capteur selon l'une des revendications 1 ou 2, dans lequel lesdits moyens sensibles audit signal électrique (D) comprennent des moyens (25,18,18') pour faire varier la valeur de ladite résistance de charge en réponse audit signal électrique (D), et des moyens (19-22) pour décharger ledit condensateur (17C) lorsque la tension à ses bornes franchit un seuil.

4. Capteur selon l'une des revendications 1 à 3, dans lequel ladite grandeur physique est la distance entre un objet métallique et le capteur, lesdits moyens (6,7) sensibles à la grandeur physique comprennent une bobine (6) d'un oscillateur (17), disposée au voisinage dudit objet, un transistor (15) monté en base commune dans la connexion d'émetteur duquel est disposé l'oscillateur (17), et un circuit de détection (16) à résistance-capacité dans la connexion de collecteur dudit transistor (15).

## Claims

1. Sensor for measuring a physical quantity, comprising:
   - means (6, 7) sensitive to this physical quantity, able to generate an electrical signal (D) representative of the latter;
   - coding means (9, 10, 11, 12) receiving said electrical signal (D);
   - an optical transmitter (12) controlled by said coding means (9, 10, 11, 12);
   - a first optic fibre (13) able to be illuminated by said optical transmitter (12);
   - a second optic fibre (1) able to transmit a second optical signal; and
   - conversion means (2), comprising a substantially circular mosaic of photo-voltaic detectors, arranged directly opposite the second optic fibre (1), which means are able to receive said second optical signal and to generate an electrical supply signal supplying said means (6, 7) sensitive to the physical quantity and said coding means (9, 10, 11, 12), characterised by the fact that said coding means (9, 10, 11, 12) comprise:
   - a capacitor (17C) charged, through the intermediary of a charge resistor (18, 18'), from said electrical supply signal;
   - an electroluminescent diode (12), corresponding to said optical transmitter, disposed opposite said first optic fibre (13); and
   - means (25, 18, 18', 19-22) sensitive to said electrical signal (D) for periodically discharging said capacitor (17C) across said electroluminescent diode (12) at a frequency linked with the value of said electrical signal (D).

2. Sensor according to Claim 1, in which said detectors of the conversion means (2) are combined in one or more groups, the detectors of the same group being connected in series and the groups being connected in parallel.

3. Sensor according to one of Claims 1 or 2, in which said means sensitive to said electrical signal (D) comprise means (25, 18, 18') for varying the value of said charge resistor in response to said electrical signal (D) and means (19-22) for discharging said capacitor (17C) when the voltage at its terminals exceeds a threshold.

4. Sensor according to one of Claims 1 to 3, in which said physical quantity is the distance between a metal object and the sensor, said means (6, 7) sensitive to the physical quantity comprise a coil (6) of an oscillator (17), disposed in the vicinity of said object, a transistor (15) mounted with a common base, in the transmitter connection of which the oscillator (17) is disposed, and a detection circuit (16) comprising a resistor/capacitor in the collector connection of said transistor (15).

## Patentansprüche

1. Sensor zur Messung einer physikalischen Größe, umfassend:
   - Mittel (6, 7), die für diese physikalische Größe empfindlich sind und in der Lage sind, ein elektrisches Signal (D), das diese repräsentiert, zu erzeugen;
   - Mittel zur Codierung (9, 10, 11, 12), welche dieses elektrische Signal (D) empfangen;
   - einen optischen Sender (12), der von den Mitteln zur Codierung (9, 10, 11, 12) gesteuert wird;
   - eine erste Lichtleitfaser (13), die von dem optischen Sender (12) angestrahlt werden kann;
   - eine zweite Lichtleitfaser (1), die in der Lage ist, ein zweites optisches Signal zu übertragen; und
   - Mittel zur Umwandlung (2), die ein im wesentlichen kreisförmiges Mosaik aus photo-voltaischen Detektoren umfassen, das der zweiten Lichtleitfaser (1) direkt gegenüber angeordnet ist, und die in der Lage sind, das zweite optische Signal zu empfangen und ein elektrisches Speisungssignal zu erzeugen, das die für die physikalische Größe empfindlichen Mittel (6, 7) und die Mittel zur Codierung (9, 10, 11, 12) speist,

   dadurch gekennzeichnet, daß die Mittel zur Codierung (9, 10, 11, 12) umfassen:
   - einen mit Hilfe eines Ladewiderstands (18, 18') über das elektrische Versorgungssignal geladenen Kondensator (17C);
   - eine Elektrolumineszenzdiode (12), die dem optischen Sender entspricht und der ersten Lichtleitfaser (13) gegenüber angeordnet ist; und

- Mittel (25, 18, 18', 19-22), die für das elektrische Signal (D) empfindlich sind, so daß der Kondensator (17C) durch die Elektrolumineszenzdiode (12) hindurch periodisch entladen wird, und zwar mit einer Frequenz, die von dem Wert des elektrischen Signals (D) abhängig ist.

2. Sensor nach Anspruch 1, bei dem die Detektoren der Mittel zur Umwandlung (2) in einer oder mehreren Gruppen angeordnet sind, wobei die Detektoren einer gleichen Gruppe in Reihe geschaltet sind und die Gruppen parallelgeschaltet sind.

3. Sensor nach einem der Ansprüche 1 oder 2, bei dem die für das elektrische Signal (D) empfindlichen Mittel (25, 18, 18') umfassen, um den Wert des Ladewiderstands in Abhängigkeit vom elektrischen Signal (D) zu verändern, und Mittel (19-22), um den Kondensator (17C) zu entladen, wenn die Spannung an seinen Klemmen einen Schwellwert überschreitet.

4. Sensor nach einem der Ansprüche 1 bis 3, bei dem die physikalische Größe die Entfernung zwischen einem metallischen Gegenstand und dem Sensor ist, wobei die für die physikalische Größe empfindlichen Mittel (6, 7) eine Spule (6) eines Oszillators (17), die in der Nähe des Gegenstands angeordnet ist, einen Transistor (15) in Basisschaltung, in dessen Emitterkreis der Oszillator (17) angeordnet ist, und eine RC-Detektorschaltung (16) im Kollektorkreis des Transistors (15) umfassen.

FIG.1

EP 0 289 379 B1

**FIG.2**

**FIG.3**

**FIG.4**

FIG. 5

FIG.6

10